# EUROPEAN PATENT APPLICATION

(11) **EP 1 560 406 A1**
(43) Date of publication of application: **03.08.2005**
(21) Application number: 05001822.5
(22) Date of filing: 28.01.2005
(51) Int. Cl.: H04M 1/725

(54) **Method for controlling the behavior of an avatar displayed on a portable communication terminal**

(30) Priority: 30.01.2004 JP 2004024204
(71) Applicant: NTT DoCoMo, Inc., Tokyo 100-6150 (JP)
(72) Inventor: Anzawa, Kazuya c/o IPD NTT DoCoMo, Inc., Tokyo (JP); Kondo, Daisuke c/o IPD NTT DoCoMo, Inc., Tokyo (JP); Hamada, Tetsuya c/o IPD NTT DoCoMo, Inc., Tokyo (JP); Kawabata, Kazuo c/o Hi Corporation, Tokyo (JP); Tsutsumi, Junya c/o HI Corporation, Tokyo (JP)
(74) Representative: HOFFMANN - EITLE

(57) **Abstract**

A program includes a parts management module (30) configured to manage parts images for display of parts in respective states constituting the avatar, an external event information generating module (21) configured to generate external event information indicating a state of the avatar based on input information from a user, a state information generating module (22) configured to generate state information providing an instruction to change at least one of the respective states of the parts based on the external event information, and an avatar image generating module (23) configured to change the at least one of the respective states of the parts according to the state information, to generate an avatar image for display of the avatar based on parts images corresponding to the respective states of the parts after the change, and to output the generated avatar image to a drawing engine (40).

## Description

### CROSS REFERENCE TO RELATED APPLICATION

This application is based upon and claims the benefit of priority from the prior Japanese Patent Application No. P2004-024204, filed on January 30, 2004; the entire contents of which are incorporated herein by reference.

### BACKGROUND OF THE INVENTION

### 1. Field of the Invention

The present invention relates to a program for controlling the behavior of an avatar displayed on a display of a portable communication terminal, and to a portable communication terminal loaded with the program.

### 2. Description of the Related Art

In recent years, videophone technologies using "avatars" , or characters showing the emotion, appearance and motion as the other self of a user in a virtual space have been developed.

Most conventional videophone technologies using avatars, however, only change the facial expression of an avatar according to the facial expression of a user (caller). There is a problem in that a technology to control motions of parts constituting an avatar so as to minutely show various motions of the avatar has not yet been developed.

Also, there is a problem in that the conventional videophone technologies using avatars do not allow terminals with limited resources such as portable communication terminals to efficiently show the behavior of an avatar.

### BRIEF SUMMARY OF THE INVENTION

The present invention has been made in view of the above problems, and has an object of providing a program which allows a terminal with limited resources such as a portable communication terminal to minutely show various motions of an avatar, and a portable communication terminal loaded with the program.

A first aspect of the present invention is summarized as a program for controlling behavior of an avatar displayed on a display of a portable communication terminal. The program includes a parts management module configured to manage parts images for display of parts in respective states constituting the avatar; an external event information generating module configured to generate external event information indicating a state of the avatar, based on input information from a user; an internal event information generating module configured to generate internal event information indicating a state of the avatar at predetermined timing, independently of the input information from the user; a state information generating module configured to generate state information providing an instruction to change at least one of the respective states of the parts, based on priorities assigned to the external event information and the internal event information, when receiving the external event information and the internal event information at the same time; and an avatar image generating module configured to change the at least one of the respective states of the parts according to the state information, to generate an avatar image for display of the avatar based on parts images corresponding to the respective states of the parts after the change, and to output the generated avatar image to a drawing engine.

In the first aspect of the invention, the avatar image generating module can configured to manage current states of the parts and target states of the parts, to change at least one of the target states of the parts according to the state information, and to change the current states of the parts to the target states of the parts, thereby changing the at least one of the respective states of the parts.

In the first aspect of the invention, the avatar image generating module can be configured to change at least one of the current states of the parts according to the state information, thereby changing the at least one of the respective states of the parts.

In the first aspect of the invention, the avatar image generating module can configured to change the current states of the parts to the target states of the parts through an interpolation state.

In the first aspect of the invention, the state information generating module can be configured to generate the state information providing an instruction to change at least one of the respective states of the parts, at predetermined timing.

In the first aspect of the invention, the avatar image generating module can configured to combine the change instructions provided by a plurality of state information generated with respect to the parts, based on predetermined weighting factors, so as to generate the avatar image.

In the first aspect of the invention, the avatar image generating module can be configured to select one or more change instructions provided by a plurality of state information generated with respect to the parts, based on predetermined priorities, so as to generate the avatar image.

A second aspect of the present invention is summarized as a portable communication terminal including: a parts management module configured to manage parts images for display of parts in respective states constituting an avatar; an external event information generating module configured to generate external event information indicating a state of the avatar, based on input information from a user; a state information generating module configured to generate state information providing an instruction to change at least one of the respective states of the parts, based on the external event information; an avatar image generating module configured to change the at least one of the respective states of the parts according to the state information, and to display the avatar based on parts images corresponding to the respective states of the parts after the change; and a communication module configured to transmit the avatar image to a terminal at the other end through a wireless network.

In the second aspect of the invention, the communication module can be configured to transmit a composite image in which a user image for display of the user taken by an imaging device and the avatar image are combined, to the terminal at the other end through the wireless network.

### BRIEF DESCRIPTION OF THE SEVERAL VIEWS OF THE DRAWINGS

FIGS. 1A and 1B are external views of a portable communication terminal according to an embodiment of the present invention;
FIG. 2 is a diagram illustrating parts constituting an avatar displayed on a display of the portable communication terminal according to the embodiment of the present invention;
FIG. 3 is a functional block diagram of the portable communication terminal according to the embodiment of the present invention;
FIGS. 4A and 4B are diagrams illustrating a whole action of the avatar displayed on the display of the portable communication terminal according to the embodiment of the present invention;
FIGS. 5A and 5B are diagrams illustrating a parts action of the avatar displayed on the display of the portable communication terminal according to the embodiment of the present invention;
FIG. 6 is a diagram illustrating a loop action of the avatar displayed on the display of the portable communication terminal according to the embodiment of the present invention;
FIG. 7 is a diagram illustrating the loop action of the avatar displayed on the display of the portable communication terminal according to the embodiment of the present invention;
FIG. 8 is a diagram illustrating a function of an external event information generating module in the portable communication terminal according to the embodiment of the present invention;
FIG. 9 is a functional block diagram of a scene control module in the portable communication terminal according to the embodiment of the present invention;
FIG. 10 is a diagram illustrating event information generated by the scene control module in the portable communication terminal according to the embodiment of the present invention;
FIGS. 11A, 11B and 11C are diagrams illustrating an example of the state of each part corresponding to each state of the avatar managed by the scene control module in the portable communication terminal according to the embodiment of the present invention;
FIG. 12 is a diagram illustrating an example of the state of each part corresponding to each state of the avatar managed by the scene control module in the portable communication terminal according to the embodiment of the present invention;
FIG. 13 is a functional block diagram of an avatar image generating module in the portable communication terminal according to the embodiment of the present invention;
FIG. 14 is a diagram illustrating an example of the states of each part managed by the avatar image generating module in the portable communication terminal according to the embodiment of the present invention;
FIG. 15 is a diagram illustrating an example of the states of a part managed by the avatar image generating module in the portable communication terminal according to the embodiment of the present invention;
FIGS. 16A and 16B are diagrams illustrating a current state of the parts and a target state of the parts managed by the avatar image generating module in the portable communication terminal according to the embodiment of the present invention;
FIG. 17 is a diagram illustrating an example of a motion of the avatar displayed on the display of the portable communication terminal according to the embodiment of the present invention;
FIG. 18 is a flowchart illustrating the operation of generating an avatar image in the portable communication terminal according to the embodiment of the present invention;
FIG. 19 is a diagram illustrating an example of the state of each part in a state of the avatar (moving state (parts action)) managed in the portable communication terminal according to the embodiment of the present invention; and
FIG. 20 is a diagram illustrating a manner in which the states of parts are changed in the portable communication terminal according to the embodiment of the present invention.

### DETAILED DESCRIPTION OF THE INVENTION

With reference to the drawings, a portable communication terminal loaded with a program according to an embodiment of the present invention will be described below. The program in this embodiment is an avatar application for controlling the behavior of an avatar displayed on a display of the portable communication terminal.

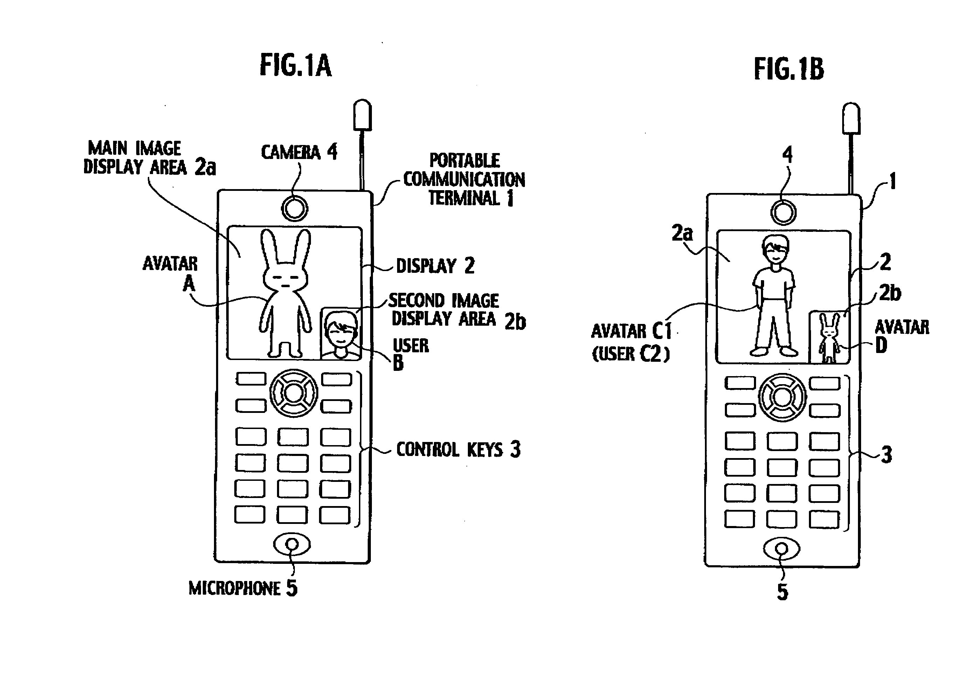

FIGS. 1A and 1B show the appearance of a portable communication terminal 1 in this embodiment. As shown in FIGS. 1A and 1B, the configuration of the portable communication terminal 1 is a common configuration, including a display 2, control keys 3, a camera 4 and a microphone 5.

The portable communication terminal 1 in this embodiment can operate in a videophone mode and in an avatar check mode.

In the avatar check mode, as shown in FIG. 1A, an avatar A is displayed in a main image display area 2a on the display 2 of the portable communication terminal 1 in this embodiment, based on an avatar image generated by the portable communication terminal 1.

A user B is displayed in a second image display area 2b on the display 2, based on an image of the user (user image) taken by the camera (imaging device) 4.

The display on the main image display area 2a and the display on the second image display area 2b can be interchanged. The user can determine whether or not to display the user B in the second image display area 2b on the display 2 at will.

The user can control the avatar A displayed in the main image display area 2a, by inputting information using the control keys 3, camera 4, microphone 5, or the like.

The user can also check the tracing of facial feature points by the portable communication terminal 1 in this embodiment, through the user B displayed in the second image display area 2b.

In the videophone mode, as shown in FIG. 1B, an avatar C1 (or a user C2) is displayed in the main image display area 2a on the display 2 of the portable communication terminal 1 in this embodiment, based on an avatar image (or a user image) received from a terminal at the other end (not shown) through a wireless network.

An avatar D is displayed in the second image display area 2b on the display 2, based on an avatar image generated by the portable communication terminal 1.

The display on the main image display area 2a and the display on the second image display area 2b can be interchanged.

The user can control the avatar D displayed in the second image display area 2b by inputting information using the control keys 3, camera 4, microphone 5, or the like.

Hereinafter, this embodiment will be described with an example in which the avatar A displayed in the main image display area 2a is controlled in the avatar check mode, unless otherwise specified.

This invention can also be applied to controlling the avatar D displayed in the second image display area 2b in the videophone mode.

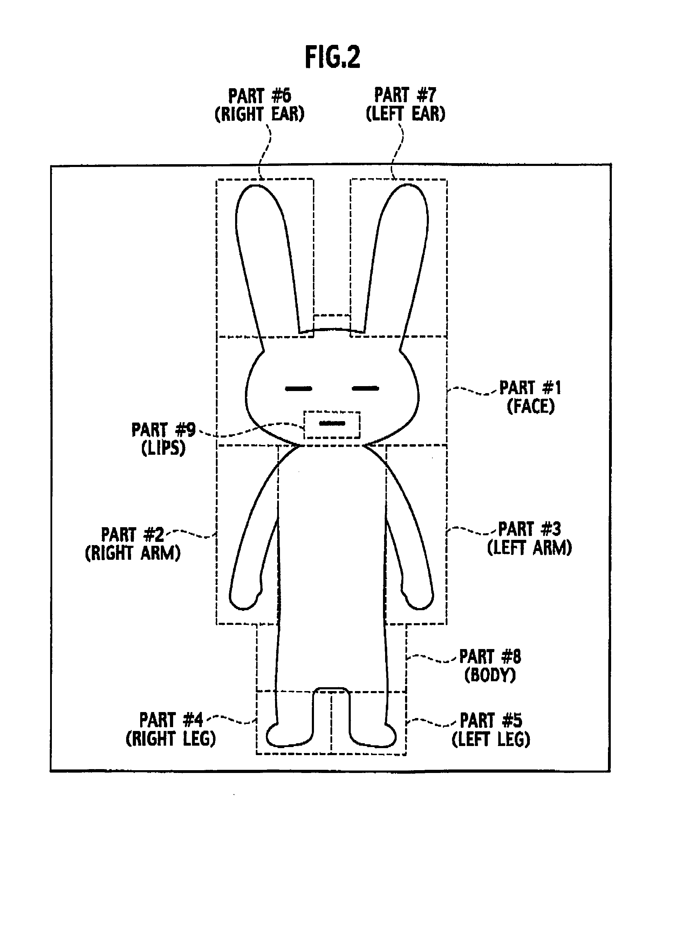

As shown in FIG. 2, the avatar A is composed of a part #1 showing a face, a part #2 showing a right arm, a part #3 showing a left arm, a part #4 showing a right leg, a part #5 showing a left leg, a part #6 showing a right ear, a part #7 showing a left ear, a part #8 showing a body, and a part #9 showing lips.

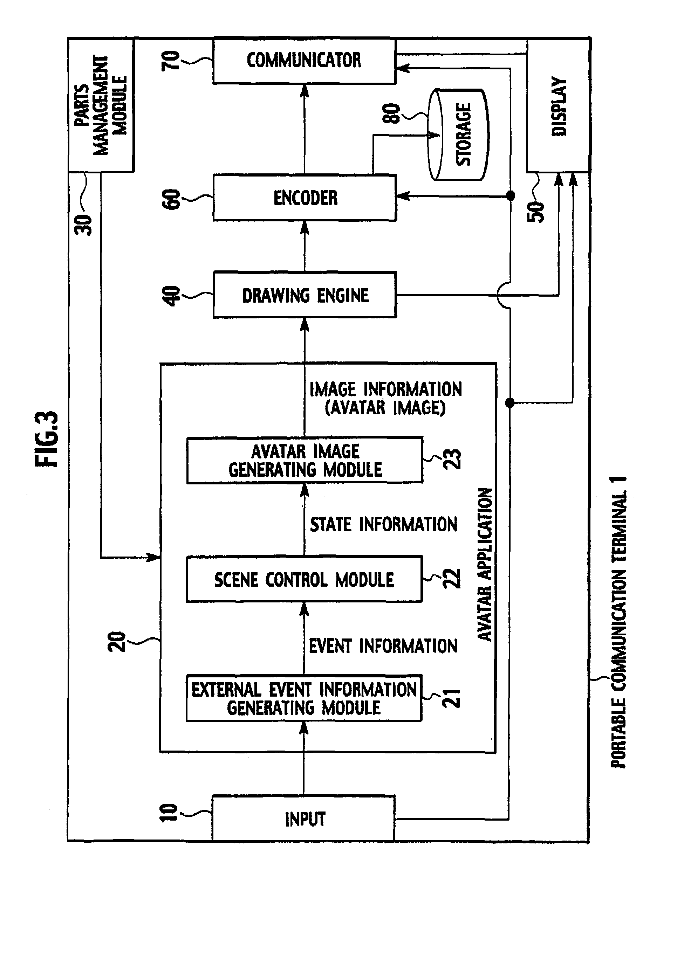

As shown in FIG. 3, the portable communication terminal 1 in this embodiment includes an input 10, an avatar application 20, a parts management module 30, a drawing engine 40, a display 50, an encoder 60, a communicator 70, and a storage 80.

The avatar application 20 corresponding to the program according to this embodiment includes an external event information generating module 21, a scene control module 22, and an avatar image generating module 23.

The input 10 is configured to receive input information (such as key input information, image information (including facial feature points), or voice information) from the user through an input device such as the control keys 3, camera 4 or microphone 5, and to transmit the input information to the external event information generating module 21.

The user operates the control keys 3 so that the avatar A displayed in the main image display area 2a on the display 2 performs a "whole action".

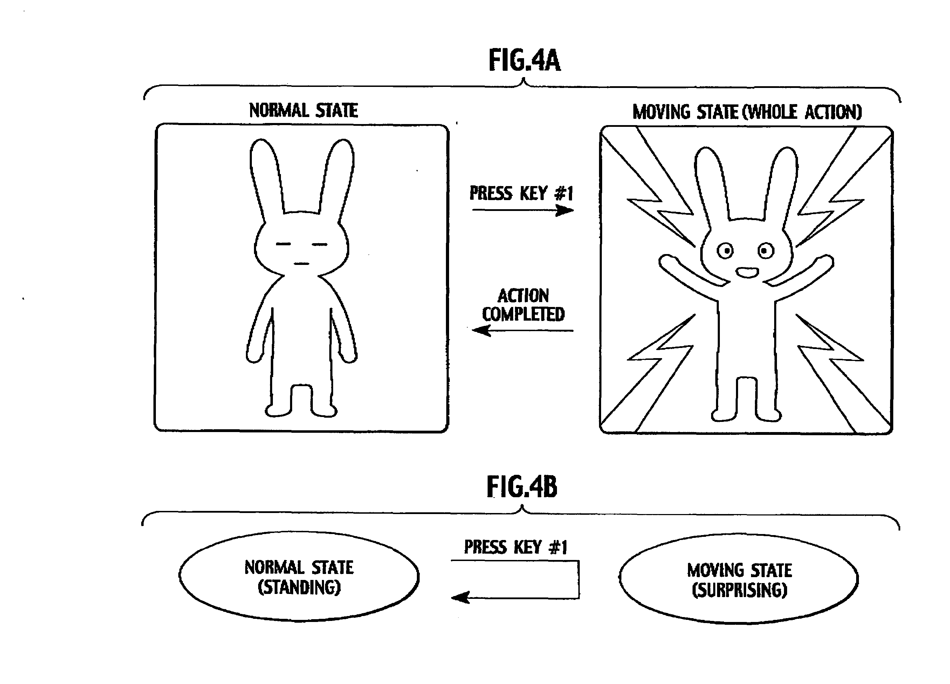

As shown in FIG. 4A, for example, the avatar changes from a "normal state" to a "moving state (whole action)", based on key input information #1, and automatically returns to the "normal state" when the "whole action" is completed. In the "normal state", the avatar is standing upright. In the "moving state (whole action) ", the avatar performs a "whole action" such as expressing surprise throughout the body. FIG. 4B shows the transition between the states of the avatar.

The user operates the control keys 3 so that the avatar A displayed in the main image display area 2a on the display 2 performs a "parts action" at corresponding one of the parts #1 to #9.

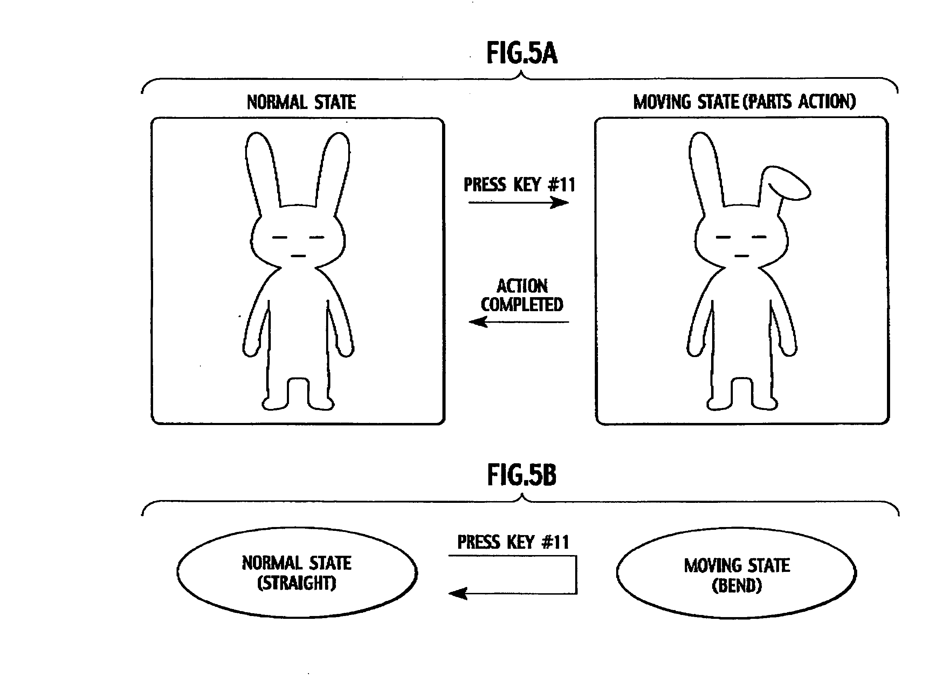

As shown in FIG. 5A, for example, the avatar changes from the "normal state" to a "moving state (parts action) 1, based on key input information #11, and automatically returns to the "normal state" when the "parts action" is completed. The "moving state (parts action)" is a state in which the avatar performs a "parts action" such as bending the part #7 (left ear) . FIG. 5B shows the transition between the states of the avatar.

The user operates the control keys 3 so that the avatar A displayed in the main image display area 2a on the display 2 performs a "loop action".

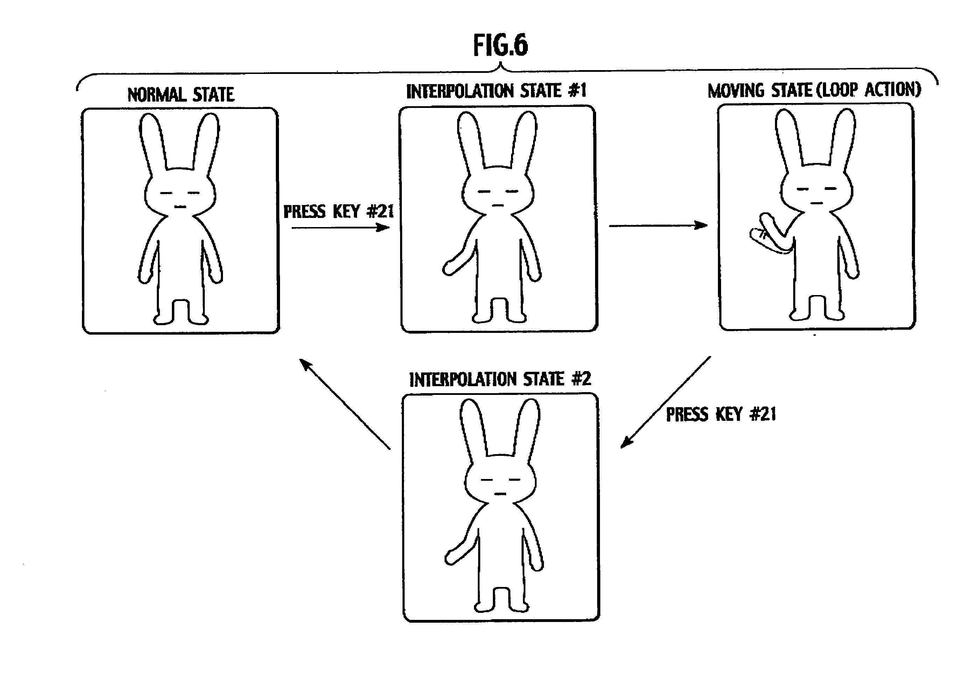

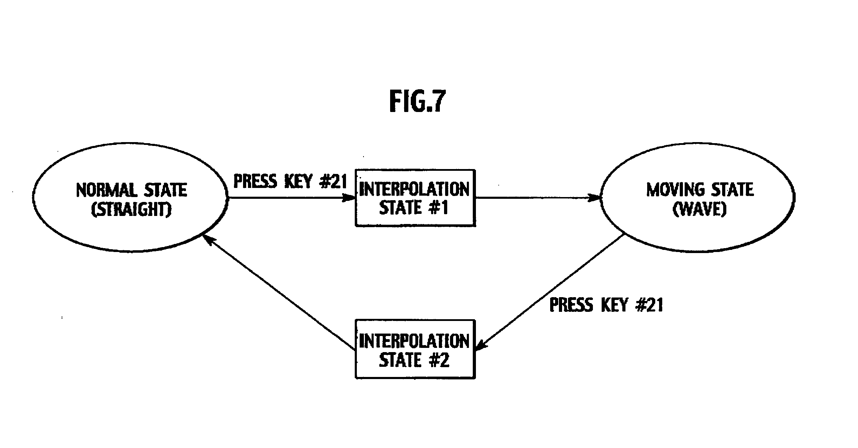

As shown in FIG. 6, for example, the avatar changes from the "normal state" through an interpolation state #1 to a "moving state (loop action)", based on key input information #21. Thereafter, based on another piece of key input information #21, the avatar changes from the "moving state (loop action) " through an interpolation state #2 to the "normal state". The "moving state (loop action) " is the state in which the avatar performs a "loop action" such as continuously waving the part #2 (right arm). In this embodiment, a loop action is considered as a whole action or a parts action. FIG. 7 shows the transition between the states of the avatar.

The avatar image (or parts images) corresponding to the interpolation states #1 and #2 may be automatically generated by image interpolation processing, using an avatar image (or parts images) corresponding to the "normal state" and an avatar image (or parts images) corresponding to the "moving state (loop action)", or may be generated independently of the avatar image (or parts images) corresponding to the "normal state" and the avatar image (or parts images) corresponding to the "moving state (loop action)".

The user inputs voice information through the microphone 5 so that the lips (part #9) of the avatar A displayed in the main image display area 2a on the display 2 perform a "lip synch action".

The "lip synch action" is such that the lips (part #9) of the avatar A open and close repeatedly when the user starts inputting voice information, and the lips (part #9) of the avatar A stop moving when the user completes inputting voice information.

The "lip synch action" may alternatively be such that the lips (part #9) of the avatar A change the form, based on phonemes identified from voice information received from the user.

The user inputs facial feature point information through the camera 4 so that the face (part #1) of the avatar A displayed in the main image display area 2a on the display 2 performs a "facial feature point action".

For example, the "facial feature point action" is such that the face (part #1) of the avatar A changes its shape, based on the facial feature point information received from the user.

The input 10 is configured to transmit a user image for display of the user B taken by the camera 4 to the encoder 60.

The external event information generating module 21 is configured to generate event information (external event information) indicating a state of the avatar A, based on input information from the user.

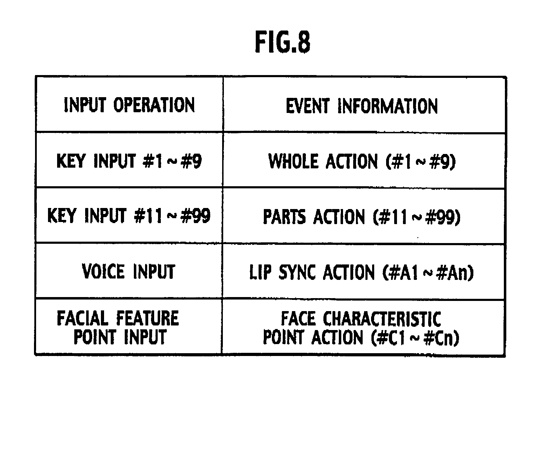

As shown in FIG. 8, for example, when receiving a piece of key input information among #1 to #9 through the input 10, the external event information generating module 21 generates event information (external event information) including a corresponding "moving state (whole action among #1 to #9)" as a state of the avatar A for transmission to the scene control module 22.

When receiving a piece of key input information among #11 to #99 through the input 10, the external event information generating module 21 generates event information (external event information) including a corresponding "moving state (parts action among #11 to #99) " as a state of the avatar A for transmission to the scene control module 22.

When receiving voice input information through the input 10, the external event information generating module 21 generates event information (external event information) including a corresponding "moving state (lip synch among #A1 to #An) " as a state of the avatar A for transmission to the scene control module 22.

When receiving facial feature point information through the input 10, the external event information generating module 21 generates event information (external event information) including a corresponding 'moving state (facial feature point action among #C1 to #Cn)" as a state of the avatar A for transmission to the scene control module 22.

The scene control module 22 is configured to generate state information providing an instruction to change at least one of the respective states of the parts constituting the avatar A, based on event information (external event information) transmitted from the external event information generating module 21.

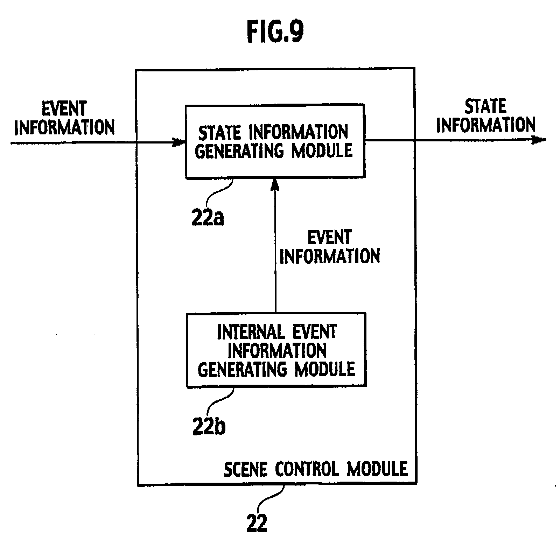

Specifically, as shown in FIG. 9, the scene control module 22 includes a state information generating module 22a and an internal event information generating module 22b.

The internal event information generating module 22b is configured to generate event information (internal event information) indicating a state of the avatar A at predetermined timing, independently of input information from the user.

More specifically, the internal event information generating module 22b generates event information including a state in which the avatar A performs a habitual action (that is, event information including a "habitual action" of the avatar A) for transmission to the avatar image generating module 23.

The habitual action may be the action of sitting or laughing at predetermined intervals, the action of telling the "hour" obtained by a timer or a clock, the action of telling the "location" obtained by the GPS or the like, or the action of telling the "direction" obtained by an acceleration sensor or a magnetic sensor, for example.

The state information generating module 22a is configured to generate the state information for controlling the respective states of the parts #1 to #9 constituting the avatar A, based on the event information transmitted from the external event information generating module 21 or the event information transmitted from the internal event information generating module 22b, and to transmit the state information to the avatar image generating module 23.

When receiving the external event information and the internal event information at the same time, the state information generating module 22a generates the state information, based on priorities assigned to the external event information and the internal event information.

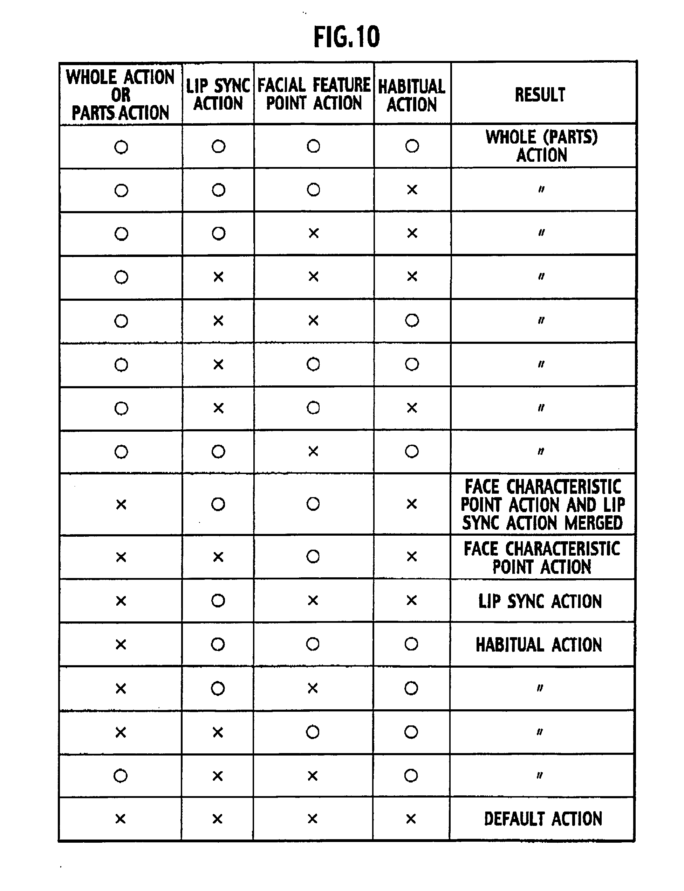

Specifically, the state information generating module 22a determines the state of the avatar to be specified in the state information, based on a table shown in FIG. 10, when receiving a plurality of event information at the same time.

For example, when receiving event information including a "whole action (or parts action)" and event information including a "habitual action" at the same time, the state information generating module 22a generates the state information for controlling the respective states of the parts, based on the "whole action (or parts action)".

When receiving event information including a "facial feature point action" and event information including a "lip synch action" at the same time, the state information generating module 22a generates the state information for controlling the respective states of the parts, based on a merged state of the avatar in which the "facial feature point action" and the "lip synch action" are combined.

When not receiving any event information, the state information generating module 22a generates the state information for controlling the respective states of the parts, based on a "default action" set as a default.

The state information generating module 22a manages the respective states of the parts corresponding to each state of the avatar.

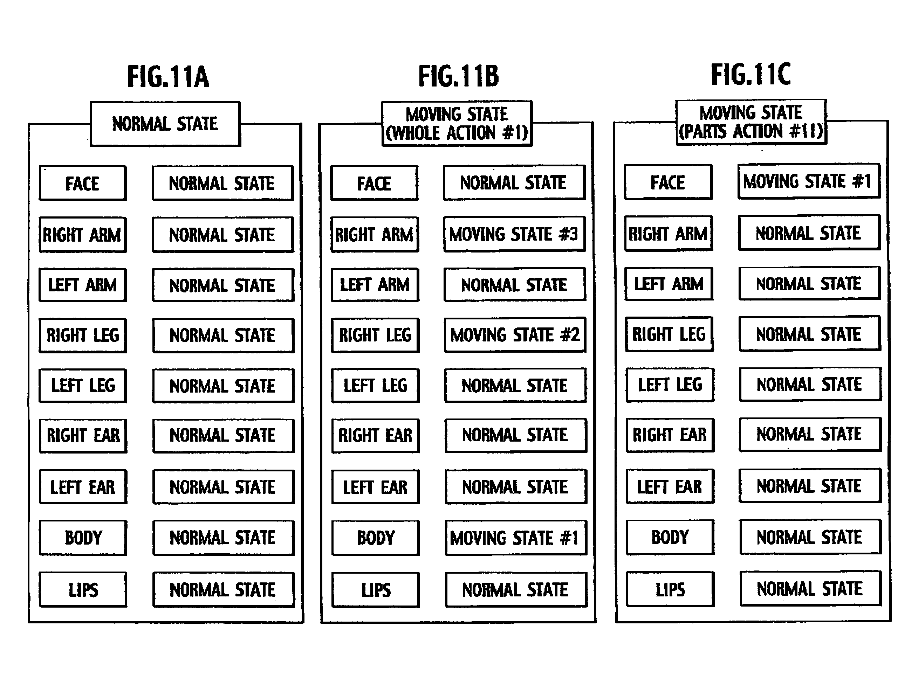

As shown in FIG. 11A, for example, the state information generating module 22a manages the state of each part, when the state of the avatar is the "normal state". When a state of the avatar included in received event information is the "normal state", the state information generating module 22a generates the state information in which the state of every part is a "normal state" for transmission to the avatar image generating module 23.

As shown in FIG. 11B, the state information generating module 22a also manages the state of each part when the state of the avatar is a "moving state (whole action #1)". When a state of the avatar included in received event information is the "moving state (whole action #1)", the state information generating module 22a generates the state information in which the state of the part #2 (right arm) is a "moving state #3", the state of the part #4 (right leg) is a "moving state #2", the state of the part #8 (body) is a "moving state #1", and the state of every other part is a "normal state", and transmits the state information to the avatar image generating module 23.

As shown in FIG. 11C, the state information generating module 22a also manages the state of each part, when the state of the avatar is a "moving state (parts action #11)". When a state of the avatar included in received event information is the "moving state (parts action #11)", the state information generating module 22a generates the state information in which the state of the part #1 (face) is a "moving state #1", and the state of every other part is a "normal state", and transmits the state information to the avatar image generating module 23.

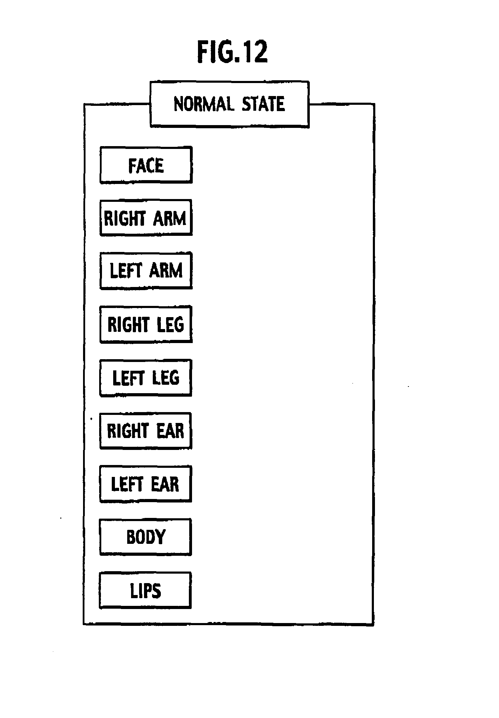

The state information generating module 22a may explicitly manage the respective states of the parts corresponding to each state of the avatar as shown in FIGS. 11A to 11C, or may inexplicitly manage the respective states of the parts corresponding to each state of the avatar as shown in FIG. 12. In this case, the respective states of the parts corresponding to each state of the avatar are default states set by motor modules 23a in the avatar image generating module 23.

The state information generating module 22a may alternatively be configured to generate the state information providing an instruction to change at least one of the respective states of the parts at predetermined timing.

For example, the state information generating module 22a may generate the state information providing an instruction to change at least one of the respective states of the parts after completion of a specific action, or may generate the state information providing an instruction to change at least one of the respective states of the parts after the lapse of a predetermined time.

The avatar image generating module 23 is configured to change the state of a specified part (s) according to the state information transmitted from the scene control module 22, to generate an avatar image for display of the avatar A, using a parts image(s) associated with the changed state(s) of the part (s) , and to output the generated avatar image to the drawing engine 40.

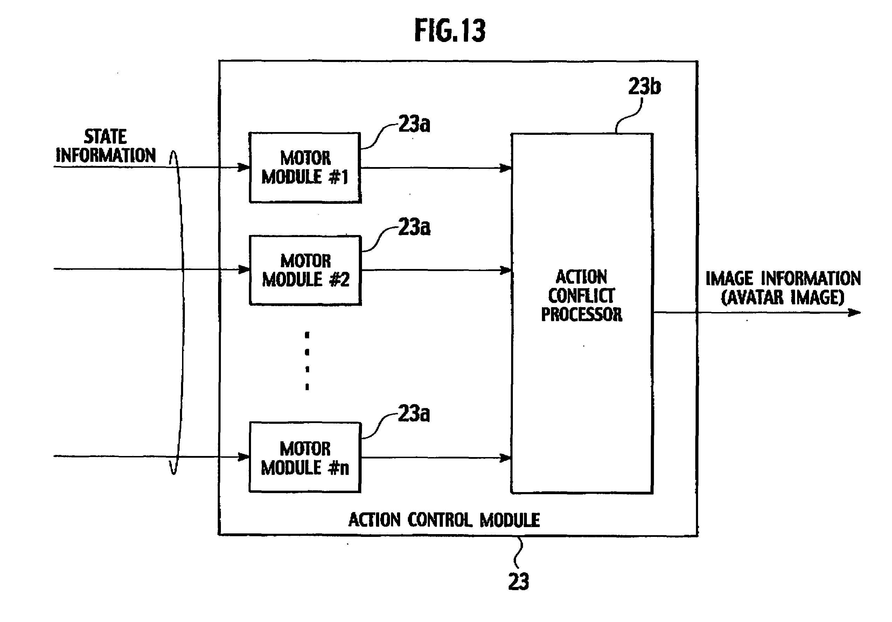

Specifically, as shown in FIG. 13, the avatar image generating module 23 includes a plurality of motor modules 23a (motor modules #1 to #n), and an action conflict processor 23b.

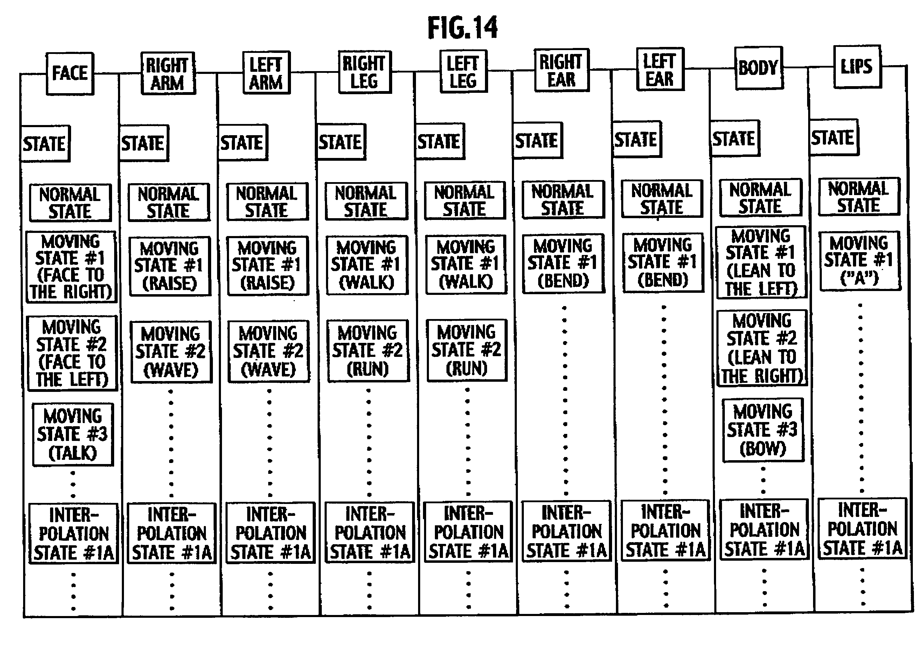

As shown in FIG. 14, the motor modules #1 to #n corresponding to the parts #1 to #n manage possible states of the corresponding parts #1 to #n.

For example, the motor module #1 manages possible states of the part #1 (face) (e.g., the normal state, a moving state #1 (face to the right) , a moving state #2 (face to the left), a moving state #3 (talk) and an interpolation state #1A) .

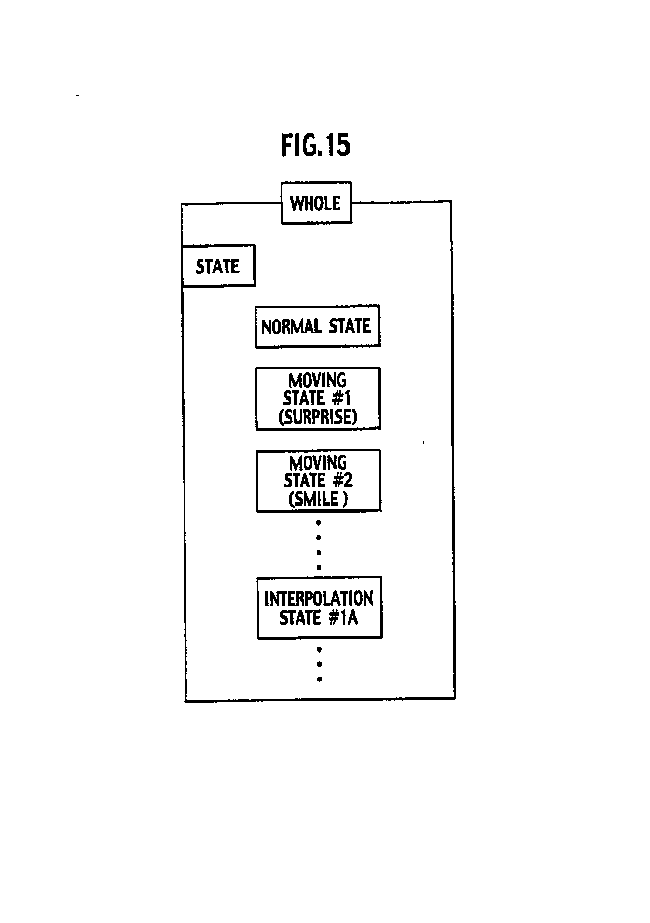

As shown in FIG. 15, a specific motor module 23a can collectively manage all the parts constituting the avatar, in which case, possible states of the collectively managed parts (e.g. , the normal state, a moving state #1 (surprise) , a moving state #2 (smile), and an interpolation state #1A) can be managed.

The motor modules #1 to #n corresponding to the parts #1 to #n change the states of the corresponding parts #1 to #n, according to the state information transmitted from the scene control module 22.

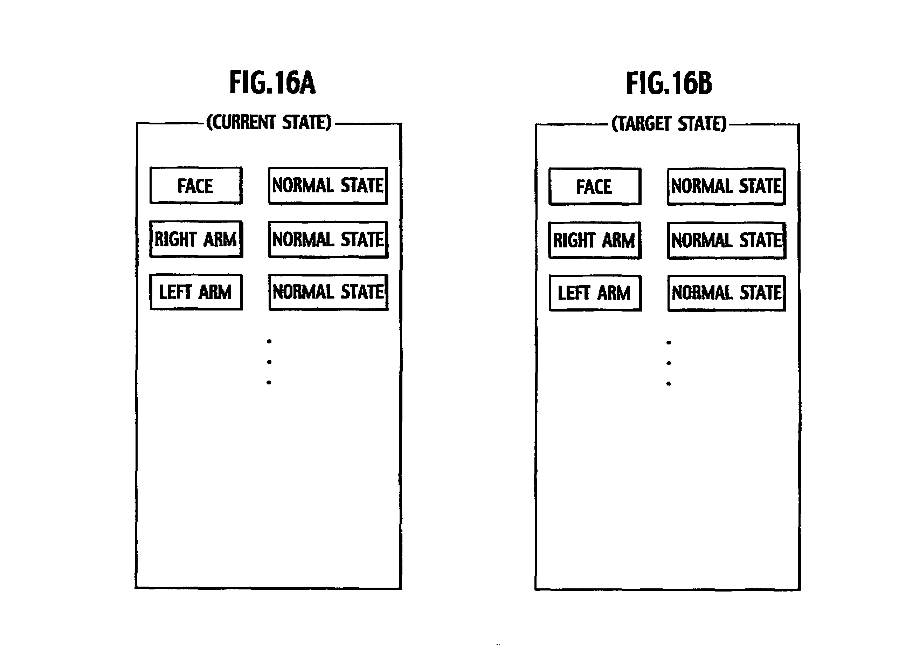

Specifically, the motor modules #1 to #n manage current states of the parts #1 to #n (see FIG. 16A) and target states of the parts #1 to #n (see FIG. 16B). The avatar A displayed on the display 2 is based on an avatar image composed of the parts #1 to #n in the current states.

According to the state information transmitted from the scene control module 22, the motor modules #1 to #n change target states of the parts #1 to #n, and changes current states of the parts #1 to #n to the target states of the parts #1 to #n through interpolation states #1A, thereby changing the respective states of the parts #1 to #n.

Therefore, even in the case where a creator of the avatar has only generated a parts image corresponding to the state of a part before a change (e.g., the normal state) and a parts image corresponding the state of the part after the change (e.g., a moving state #1) , the motion of the part is changed through a parts image corresponding to an automatically generated interpolation state, resulting in a natural motion as compared with a direct change from a parts image before a change to a parts image after the change.

The motor modules #1 to #n may alternatively be configured to change the respective states of the parts #1 to #n, by changing current states of the parts #1 to #n, according to the state information transmitted from the scene control module 22.

In this case, a creator of the avatar can generate a parts image corresponding to a changed state of a part (e.g. , a moving state #1) as a moving image showing a more minute motion, thereby making the motion of the part a more natural motion as intended by the creator of the avatar.

The motor modules #1 to #n may be configured to cooperatively change the respective states of the parts #1 to #n, when the state information transmitted from the scene control module 22 indicates a "whole action".

That is, a "parts action" may be a motion of the avatar controlled by corresponding one of the motor modules #1 to #n, and a "whole action" may be a motion of the avatar controlled by two or more of the motor modules #1 to #n.

With this, motions of the parts prepared by the creator of the avatar for whole actions can be used for parts actions, resulting in reduced parts images managed by the parts management module 30, and expression of free movements of the avatar,

When two or more pieces of state information are generated with respect to any of the parts #1 to #n, the action conflict processor 23b is configured to combine the change instructions provided by the pieces of state information, based on predetermined weighting factors, so as to generate an avatar image.

For example, when the state information providing an instruction to "raise forward" and the state information providing an instruction to "raise horizontally to the right" are generated with respect to the part #2 (right arm), with weighting factors assigned to those pieces of state information as "1:1", the action conflict processor 23b generates an avatar image based on a parts image in which the right arm is raised obliquely forward to the right.

when the state information providing an instruction to "raise forward" and the state information providing an instruction to "raise horizontally to the right" are generated with respect to the part #2 (right arm) , with weighting factors assigned to those pieces of state information as "2:1", the action conflict processor 23b generates an avatar image based on a parts image in which the right arm is raised obliquely forward to the right front.

When the state information providing an instruction to "raise forwardly and the state information providing an instruction to "raise horizontally to the right" are generated with respect to the part #2 (right arm) , with weighting factors assigned to those pieces of state information as "1:0", the action conflict processor 23b generates an avatar image based on a parts image in which the right arm is raised forward.

Alternatively, when two or more pieces of state information are generated with respect to any of the parts #1 to #n, the action conflict processor 23b may select one or more change instructions provided by those pieces of state information, based on predetermined priorities, so as to generate an avatar image.

For example, the state information providing an instruction to "raise" and the state information providing an instruction to "wave" are generated with respect to the part #3 (left arm) , with the priority of a moving state #2 (wave) coming before the priority of a moving state #1 (raise), the action conflict processor 23b generates an avatar image based on a parts image in which the left arm is waved.

The parts management module 30 is configured to manage various data required to generate avatar images. For example, the parts management module 30 manages parts images for display of the parts in respective states (such as the normal state, the moving states #1 to #n and the interpolation state #1A) constituting the avatar A.

The parts images for display of the parts in respective states constituting the avatar A may alternatively be managed in the avatar application 20.

The parts management module 30 is configured to manage rules for the transition between states of each part, as well as the above-described parts images.

With this, a system can be provided in which the intention of the creator of the parts images (avatar images) is reflected in the continuity of the appearance and motion of each part during transition between states, as well as the appearances and motions of the parts in respective states.

The drawing engine 40 is configured to generate drawing information on the avatar A, based on the avatar image generated by the avatar application 20.

For example, the drawing engine 40 generates the drawing information for display of the avatar A in a 3D format or a 2D format on the display 2.

An avatar image generated by the avatar application 20 may include a background image, or may not include a background image.

The display 50 is configured to show the avatar A in the main image display area 2a on the display 2, according to the drawing information transmitted from the drawing engine 40, and to show the image of the user (user B) taken by the camera (imaging device) 4 in the second image display area 2b on the display 2.

The display 50, when operated in the videophone mode, may show the avatar C1 (user C2) in the main image display area 2a on the display 2 according to an instruction from the communicator 70, based on an avatar image (user image) received from a terminal at the other end through a wireless network, and show the avatar D in the second image display area 2b on the display 2, based on the drawing information transmitted from the drawing engine 40.

The encoder 60 is configured to encode the drawing information on the avatar A generated by the drawing engine 40 in a format suitable for radio communication through a wireless network. For example, the encoder 60 may encode the drawing information on the avatar A in MPEG-4 or H.263 format.

The encoder 60 may also be configured to encode a combination of the user image for display of the user taken by the camera 4 and the drawing information on the avatar A generated by the drawing engine 40.

For example, the encoder 60 can merge them so that the part #1 (face) of the avatar A generated by the drawing engine 40 is displayed at the position of the face of the user, or at the position where the face of the user is not located.

The encoder 60 transmits the encoded information generated as described above to the communicator 70, or stores the encoded information in the storage 80.

The communicator 70 is configured to transmit the encoded information received from the encoder 60 to a terminal at the other end. The communicator 70 transmits the avatar image and the user image received from the terminal at the other end through the wireless network to the display 50.

The communicator 70 may be configured to transmit two or more pieces of encoded information (e.g., the encoded information including the avatar image and the encoded information including the user image) at the same time.

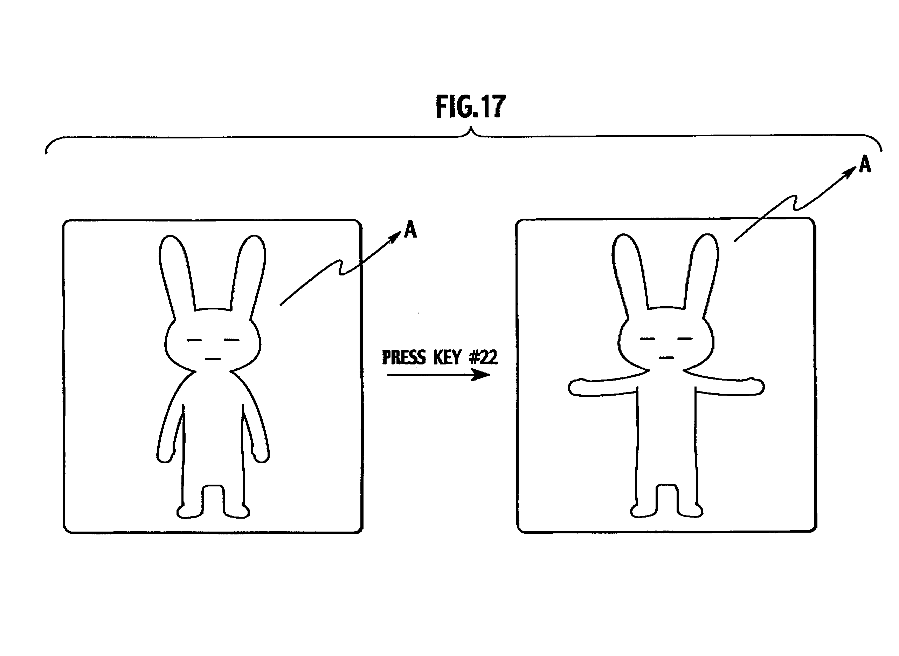

With reference to FIGS. 17 to 19, the operation of the portable communication terminal 1 in this embodiment for generating an avatar image will be described. In this embodiment, as shown in FIG. 17, an example in which the avatar A moves from a state of standing upright to- a state of raising both arms will be described.

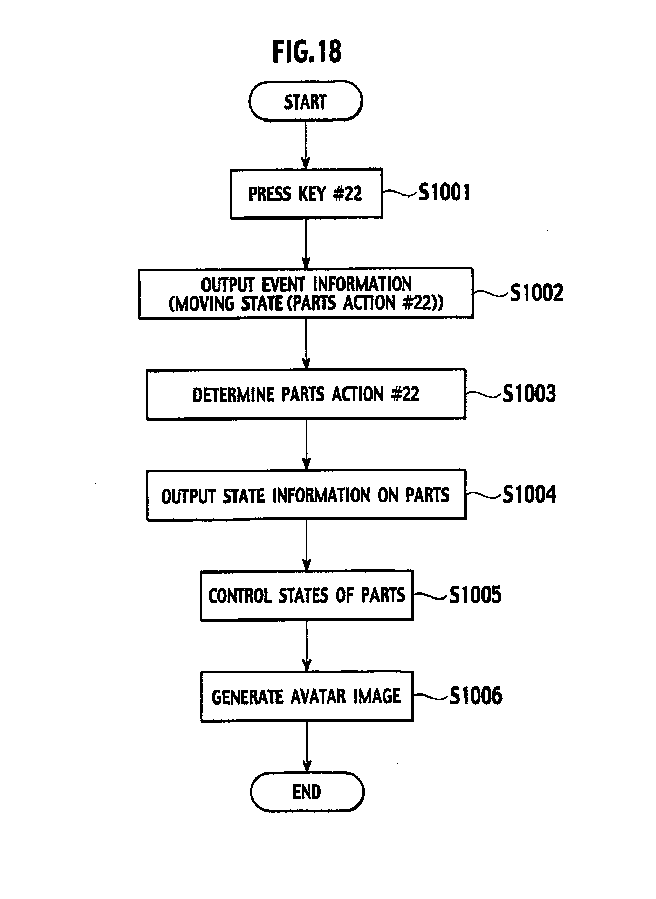

As shown in FIG. 18, in step S1001, the user operates (presses) the control keys 3 to input key input information #22.

In step S1002, the external event information generating module 21 in the avatar application 20 in the portable communication terminal 1 generates and outputs event information indicating a "parts action #22" as the state of the avatar, according to the received key input information #22.

In step S1003, the scene control module 22 in the avatar application 20 in the portable communication terminal 1 determines that the state of the avatar specified by the user is a "moving state (parts action #22) " for performing the parts action #22, based on the received event information.

In step S1004, the scene control module 22 generates and outputs state information providing an instruction to change the respective states of the corresponding parts, based on the determined avatar state "moving state (parts action #22)".

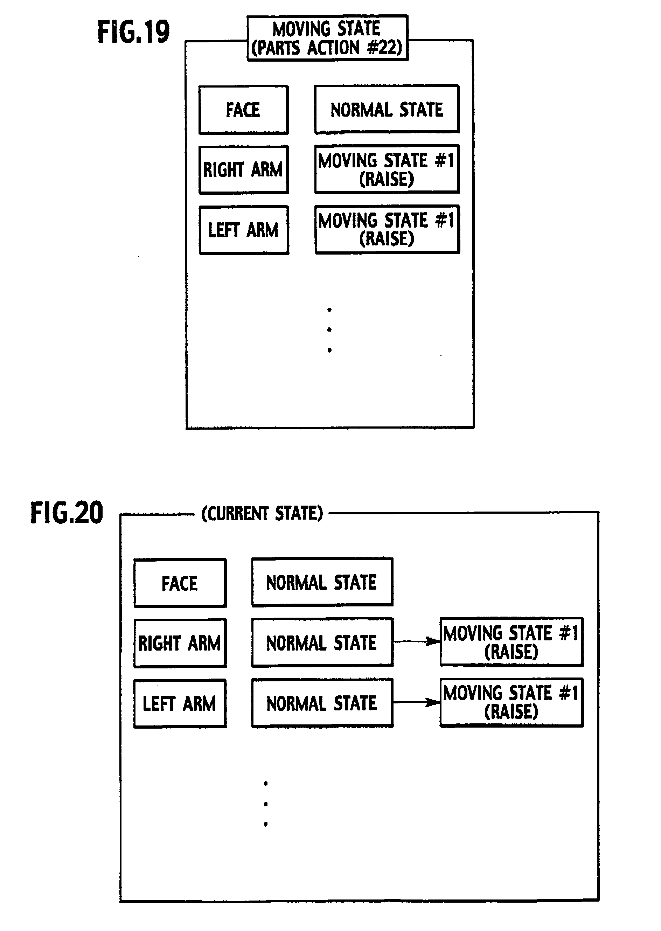

Specifically, as shown in FIG. 19, the scene control module 22 generates the state information providing an instruction to change the respective states of the parts corresponding to the "moving state (parts action #22)", that is, to change the state of the part #2 (right arm) to a "moving state #1 (raise)" and the state of the part #3 (left arm) to a "moving state #1 (raise)".

In step S1005, the avatar image generating module 23 in the avatar application 20 in the portable communication terminal 1 controls the respective states of the parts, based on the received state information.

Specifically, as shown in FIG. 20, the avatar image generating module 23 changes the current state of the part #2 (right arm) from the "normal state" to the "moving state #1 (raise)", and changes the current state of the part #3 (left arm) from the "normal state" to the "moving state #1 (raise) based on the received state information.

In step S1006, the avatar image generating module 23 generates and outputs an avatar image for display of the avatar A, based on parts images corresponding to the current states of all the parts including the changed parts #2 and #3.

According to the portable communication terminal 1 in this embodiment, parts images for display of parts in respective states constituting an avatar are managed, and the avatar image generating module 23 generates an avatar image for display of the avatar A, using parts images corresponding to the respective states of the parts changed according to state information, whereby the motions of the parts constituting the avatar A can be controlled. Therefore, even on a terminal with limited resources like the portable communication terminal 1, various motions of the avatar A can be efficiently minutely shown.

Also, according to the portable communication terminal 1 in this embodiment, a habitual motion of the avatar A can be shown, independently of the intention of the user.

Also, according to the portable communication terminal 1 in this embodiment, even when a motion of the avatar A specified by the user conflicts with a habitual motion of the avatar A, the movement of the avatar A can be efficiently controlled, based on predetermined priorities.

Also, according to the portable communication terminal 1 in this embodiment, the parts are changed from current states to target states through interpolation states #1, which can reduce the effort of the creator of parts images in creating parts images for showing transitional states from current states of the parts to target states of the parts, providing more smooth movements of the avatar A.

Also, according to the portable communication terminal 1 in this embodiment, interpolation states. can be inserted between current states and target states of the parts, thereby reducing the amount of data regarding transitions of parts images, and leading to increased representational power provided to a portable terminal with limited resources.

Also, according to the portable communication terminal 1 in this embodiment, a parts image corresponding to a current state of a part before a change is quickly changed to a parts image corresponding to a current state of the part after the change, so that the creator of parts images can freely create a parts image corresponding to a current state of a part after a change. A parts image corresponding to a current state of a part after a change can be in the form of a moving image showing a more minute motion of the avatar, thereby showing various motions of the avatar as intended by the creator.

The present invention can provide a program which allows a terminal with limited resources such as a portable communication terminal to minutely show various motions of an avatar, and a portable communication terminal loaded with the program.

Additional advantages and modifications will readily occur to those skilled in the art. Therefore, the invention in its broader aspects is not limited to the specific details and the representative embodiment shown and described herein. Accordingly, various modifications may be made without departing from the scope of the general inventive concept as defined by the appended claims and their equivalents.

## Claims

1. A program for controlling behavior of an avatar displayed on a display of a portable communication terminal, the program comprising:
a parts management module configured to manage parts images for display of parts in respective states constituting the avatar;
an external event information generating module configured to generate external event information indicating a state of the avatar, based on input information from a user;
an internal event information generating module configured to generate internal event information indicating a state of the avatar at predetermined timing, independently of the input information from the user;
a state information generating module configured to generate state information providing an instruction to change at least one of the respective states of the parts, based on priorities assigned to the external event information and the internal event information, when receiving the external event information and the internal event information at the same time; and
an avatar image generating module configured to change the at least one of the respective states of the parts according to the state information, to generate an avatar image for display of the avatar based on parts images corresponding to the respective states of the parts after the change, and to output the generated avatar image to a drawing engine.

2. The program as set forth in claim 1, wherein the avatar image generating module is configured to manage current states of the parts and target states of the parts, to change at least one of the target states of the parts according to the state information, and to change the current states of the parts to the target states of the parts, thereby changing the at least one of the respective states of the parts.

3. The program as set forth in claim 2, wherein the avatar image generating module is configured to change at least one of the current states of the parts according to the state information, thereby changing the at least one of the respective states of the parts.

4. The program as set forth in claim 2, wherein the avatar image generating module is configured to change the current states of the parts to the target states of the parts through an interpolation state.

5. The program as set forth in claim 1, wherein the state information generating module is configured to generate the state information providing an instruction to change at least one of the respective states of the parts, at predetermined timing.

6. The program as set forth in claim 1, wherein the avatar image generating module is configured to combine the change instructions provided by a plurality of state information. generated with respect to the parts, based on predetermined weighting factors, so as to generate the avatar image.

7. The program as set forth in claim 1, wherein the avatar image generating module is configured to select one or more change instructions provided by a plurality of state information generated with respect to the parts, based on predetermined priorities, so as to generate the avatar image.

8. A portable communication terminal, comprising:
a parts management module configured to manage parts images for display of parts in respective states constituting an avatar;
an external event information generating module configured to generate external event information indicating a state of the avatar, based on input information from a user;
a state information generating module configured to generate state information providing an instruction to change at least one of the respective states of the parts, based on the external event information;
an avatar image generating module configured to change the at least one of the respective states of the parts according to the state information, and to display the avatar based on parts images corresponding to the respective states of the parts after the change; and
a communication module configured to transmit the avatar image to a terminal at the other end through a wireless network.

9. The portable communication terminal as set forth in claim 8, wherein the communication module is configured to transmit a composite image in which a user image for display of the user taken by an imaging device and the avatar image are combined, to the terminal at the other end through the wireless network.
